# EUROPEAN PATENT APPLICATION

(11) **EP 3 287 979 A1**
(43) Date of publication of application: **28.02.2018**
(21) Application number: 17160164.4
(22) Date of filing: 09.03.2017
(51) Int. Cl.: G06Q 30/06, G06F 3/0487

(54) **RESOURCE TRANSFER METHOD AND DEVICE**

(30) Priority: 24.08.2016 WO PCT/CN2016/096462
(71) Applicant: Beijing Xiaomi Mobile Software Co., Ltd., Beijing 100085 (CN)
(72) Inventor: ZHANG, Weiliang, Beijing, 100085 (CN); SUI, Xin, Beijing, 100085 (CN); WANG, Jiaqi, Beijing, 100085 (CN); JIANG, Ronghua, Beijing, 100085 (CN)
(74) Representative: Steinbauer, Florian

(57) **Abstract**

Embodiments of the present invention relates to a resource transfer method and device, involving the data processing field. The method includes: displaying (201, 301, 706) a GUI for exchanging a processing object, the GUI including a first control for confirming the exchanging; when a three-dimensional touch operation is received at the first control, sending (202, 308, 715) a first transfer instruction to a server, the first transfer instruction being used for requesting the server to generate an order corresponding to the processing object, and transferring a resource for exchanging the processing object from a first account to a second account after generation of the order; receiving (203, 309, 717) a first success response sent by the server; and displaying (204, 310, 718) prompt information corresponding to the first success response.

## Description

### TECHNICAL FIELD

The present invention generally relates to the field of data processing, and more particularly, to a resource transfer method and device.

### BACKGROUND

One of the most widely used functions of electronic devices, such as smart phones and tablet computers, during the daily usage is purchasing or exchanging commodities via resources.

In related art, the electronic device displays a webpage for purchasing relevant commodities, and the webpage for purchasing includes a purchasing button. When the user clicks the purchasing button, the electronic device will send a purchasing instruction to a server, then the server generates an order corresponding to the commodity according to the purchasing instruction, and feeds back an order paying webpage to the electronic device, and then the electronic device displays the order paying webpage in which a payment button is displayed. After the user clicks the payment button, the electronic device will send a payment instruction to the server, and then the server transfers a resource corresponding to the commodity from a first account of the purchaser to a second account of the seller according to the payment instruction.

### SUMMARY

In order to simplify the operations during transfer of resources by the user, the embodiments of the present invention provide a resource transfer method, device and system. The technical solutions are as follows.

According to a first aspect of the present invention, there is provided a resource transfer method, including:
displaying a Graphical User Interface GUI for exchanging a processing object, the GUI including a first control for confirming the exchanging;
when a three-dimensional touch operation is received at the first control, sending a first transfer instruction to a server, the first transfer instruction being used for requesting the server to generate an order corresponding to the processing object, and transferring a resource for exchanging the processing object from a first account to a second account after generation of the order;
receiving a first success response sent by the server; and
displaying prompt information corresponding to the first success response.

In an optional embodiment, the method further includes:
when a two-dimensional touch operation is received at the first control, sending a confirm exchanging instruction to the server, the confirm exchanging instruction being used for requesting the server to generate the order corresponding to the processing object;
receiving order data of the order fed back by the server; and
displaying a resource transfer page according to the order data of the order, the resource transfer page including a second control for confirming the resource transfer.

In an optional embodiment, the method further includes:
when the two-dimensional touch operation is received at the second control, sending a second transfer instruction to the server, the second transfer instruction being used for requesting the server to transfer the resource for exchanging the processing object from the first account to the second account;
receiving a second success response sent by the server; and
displaying prompt information corresponding to the second success response.

In an optional embodiment, the method further includes:
displaying a pre-authorized GUI, the pre-authorized GUI being a GUI for enabling a three-dimensional touch quick transfer function;
acquiring user authorization information via the pre-authorized GUI; and
sending an enabling instruction carrying the user authorization information to the server, the enabling instruction being used for indicating the server to enable the three-dimensional touch quick transfer function corresponding to the first account.

In an optional embodiment, the processing object is a commodity, the first control is a purchase button, the resource is currency in an electronic form.

According to a second aspect of the present invention, there is provided a resource transfer device, including:
a displaying module configured to display a Graphical User Interface GUI for exchanging a processing object, the GUI including a first control for confirming the exchanging;
a sending module configured to, when a three-dimensional touch operation is received at the first control, send a first transfer instruction to a server, the first transfer instruction being used for requesting the server to generate an order corresponding to the processing object, and transferring a resource for exchanging the processing object from a first account to a second account after generation of the order; and
a receiving module configured to receive a first success response sent by the server;
wherein the displaying module is configured to display prompt information corresponding to the first success response.

In an optional embodiment, the device further includes:
the sending module configured to, when a two-dimensional touch operation is received at the first control, send a confirm exchanging instruction to the server, the confirm exchanging instruction being used for requesting the server to generate the order corresponding to the processing object;
the receiving module configured to receive order data of the order fed back by the server; and the displaying module configured to display a resource transfer page according to the order data of the order, the resource transfer page including a second control for confirming the resource transfer.

In an optional embodiment, the sending module is configured to, when the two-dimensional touch operation is received at the second control, send a second transfer instruction to the server, the second transfer instruction being used for requesting the server to transfer the resource for exchanging the processing object from the first account to the second account;
the receiving module is configured to receive a second success response sent by the server; and
the displaying module is configured to display prompt information corresponding to the second success response.

In an optional embodiment, the device further includes: an acquiring module, wherein
the displaying module is configured to display a pre-authorized GUI, the pre-authorized GUI being a GUI for enabling a three-dimensional touch quick transfer function;
the acquiring module is configured to acquire user authorization information via the pre-authorized GUI; and
the sending module is configured to send an enabling instruction carrying the user authorization information to the server, the enabling instruction being used for indicating the server to enable the three-dimensional touch quick transfer function corresponding to the first account.

In an optional embodiment, the processing object is a commodity, the first control is a purchase button, the resource is currency in an electronic form, the first account is a resource account of a purchaser, and the second account is a resource account of a seller or an immediate account provided by a resource transfer platform.

According to a third aspect of the present invention, there is provided a resource transfer device, including:
a processor;
a memory for storing instructions executable by the processor; and
a three-dimensional touch display screen connected with the processor,
wherein the processor is configured to perform a method according to the invention.

The present invention also provides a computer program, which when executed on a processor of a terminal, performs a method according to the invention, and a computer readable storage device having stored thereon such a computer program.

The technical solutions provided by embodiments of the present invention may have the following beneficial effects.

When a three-dimensional touch operation is received at the first control, a first transfer instruction is directly sent to a server, then the server generates an order corresponding to the processing object according to the first transfer instruction, and transfers a resource for exchanging the processing object from a first account to a second account after generation of the order; which solves the problem in the related art that the generation and payment of orders can only be completed by using multiple touch operations, and achieves the effects that the user can complete the generation and payment of the orders only by using one three-dimensional touch operation, operation numbers of the user and waiting time for jumping of the graphical user interface are reduced, and the operating efficiency of the user is improved.

### BRIEF DESCRIPTION OF THE DRAWINGS

To explain the technical solutions in the embodiments of the present invention more clearly, hereinafter, the drawings required for describing the embodiments will be introduced simply. Obviously, the drawings described below are only some embodiments in the present invention. For the person skilled in the art, other drawings may be obtained according to these drawings without paying inventive labor.
Fig. 1 is a structural schematic diagram of a resource transfer system provided by an exemplary embodiment of the present invention;
Fig. 2 is a flow chart of a resource transfer method provided by an exemplary embodiment of the present invention;
Fig. 3 is a flow chart of a resource transfer method provided by another exemplary embodiment of the present invention;
Fig. 4 is a flow chart of an interface when implementing the resource transfer method provided by another exemplary embodiment of the present invention;
Fig. 5 is a flow chart of an interface when implementing the resource transfer method provided by another exemplary embodiment of the present invention;
Fig. 6 is a flow chart of an interface when implementing the resource transfer method provided by another exemplary embodiment of the present invention;
Fig. 7 is a flow chart of a resource transfer method provided by another exemplary embodiment of the present invention;
Fig. 8 is a flow chart of an interface when implementing the resource transfer method provided by another exemplary embodiment of the present invention;
Fig. 9 is a block diagram of a resource transfer device provided by another exemplary embodiment of the present invention; and
Fig. 10 is a block diagram of a resource transfer device provided by another exemplary embodiment of the present invention.

### DETAILED DESCRIPTION

To make purposes, technical solutions and advantages of the present invention clearer, hereinafter, the implementing manners of the present invention will be further described in detail in conjunction with the drawings.

First, several terms involved in the embodiments of the present invention are introduced as follows.

Processing object: the processing object means a physical commodity or a virtual commodity having an exchangeable attribute. Advantageously, the physical commodity is an article existing in the real world, such as a personal electronic device, a household item, a household appliance, food, and clothes. Advantageously, the virtual commodity is an article existing in a computer system, a network world or a virtual world, such as an E-book, a game prop and a virtual gift.

Exchanging: the exchanging means a procedure of exchanging the processing object of a second user by using a resource of a first user. The first user is also called as a purchaser, and the second user is also called as a seller. In different usage scenarios, the exchanging means at least one of operations of converting, purchase, and transaction.

Resource: the resource means a numerical value having a value attribute represented by an electronic form. The common resources include at least one of electronic currency, virtual credits, virtual levels, virtual props, and virtual characters. In the following, the electronic currency is used as the resource for illustrative explanations.

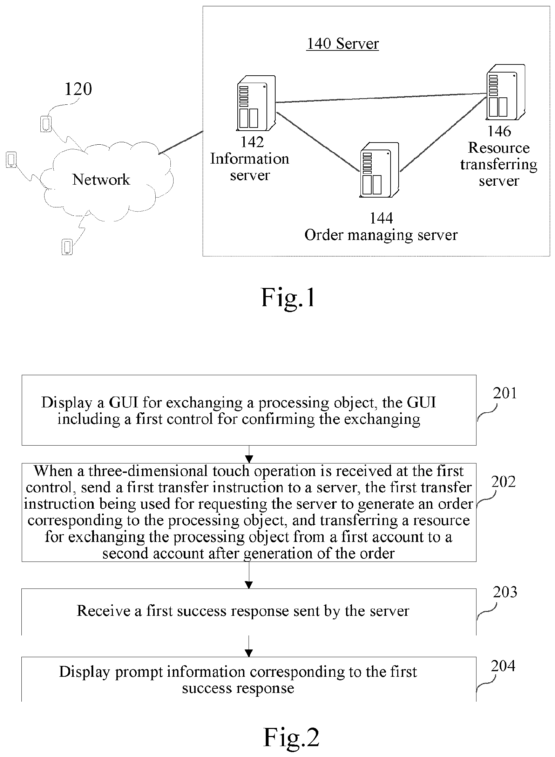

Fig. 1 is a structural schematic diagram of a resource transfer system provided by an exemplary embodiment of the present invention. The resource transfer system includes: a terminal 120 and a server 140.

The terminal 120 may be a mobile phone, a tablet computer, an E-book reader, a MP3 (Moving Picture Experts Group Audio Layer III) player, a MP4 (Moving Picture Experts Group Audio Layer IV) player, and the like. A client terminal is running in the terminal 120. The client terminal is a client terminal having a processing object exchanging function, such as a purchasing client terminal.

Advantageously, the terminal 120 may be provided with a touch display screen supporting both a two-dimensional touch and a three-dimensional touch (3D-Touch) functions. That is, the user may use the two-dimensional touch operation to operate the terminal 120, or may use the three-dimensional touch operation to operate the terminal 120. The two-dimensional touch operation is a touch operation indicated by an abscissa axis and a vertical axis in a plane in which the touch display screen is located; and the three-dimensional touch operation is a touch operation indicated by an abscissa axis and a vertical axis in a plane in which the touch display screen is located as well as a pressure value perpendicular to the plane in which the touch display screen is located. Advantageously, the pressure value is not necessarily absolutely perpendicular to the touch display screen.

Advantageously, the terminal 120 is connected to the server 140 via a wired network or a wireless network.

The server 140 may be one server, or a server cluster consisting of several servers, or a cloud computing service center. The server 140 is a background server for providing a processing object exchanging function. In an alternative embodiment, the server 140 includes: an information server 142, an order managing server 144 and a resource transferring server 146. The information server 142 is used for managing information of respective processing objects, such as webpage displaying pages of respective processing objects. The order managing server 144 is used for generating and managing orders, and the orders are for exchanging target objects. Advantageously, the resource transferring server 146 is used for realizing the transfer of the resource between the first account and the second account. Advantageously, the first account is an account of a purchaser, and the second account is an account of a seller or an immediate account provided by the resource transferring server 146.

Fig. 2 is a flow chart of a resource transfer method provided by an exemplary embodiment of the present invention. In the present embodiment, illustrations are given by applying the resource transfer method to the terminal 120 shown in Fig. 1. The method includes the following steps.

In step 201, a GUI for exchanging a processing object is displayed, the GUI including a first control for confirming the exchanging.

In step 202, when a three-dimensional touch operation is received at the first control, a first transfer instruction is sent to a server, the first transfer instruction being used for requesting the server to generate an order corresponding to the processing object, and transferring a resource for exchanging the processing object from a first account to a second account after generation of the order.

Advantageously, the three-dimensional touch operation is a touch operation with a pressure value exceeding a predetermined threshold value.

Advantageously, the first account is an account of a purchaser, and the second account is an account of a seller or an immediate account provided by the resource transferring server.

In step 203, a first success response sent by the server is received.

In step 204, prompt information corresponding to the first success response is displayed.

In summary, in the resource transfer method provided by the present embodiment, when a three-dimensional touch operation is received at the first control, a first transfer instruction is directly sent to a server, then the server generates an order corresponding to the processing object according to the first transfer instruction, and transfers a resource for exchanging the processing object from a first account to a second account after generation of the order; which solves the problem in the related art that the generation and payment of orders can only be completed by using multiple touch operations, and achieves the effects that the user can complete the generation and payment of the orders only by using one three-dimensional touch operation, operation numbers of the user and waiting time for jumping of the graphical user interface are reduced, and the operating efficiency of the user is improved.

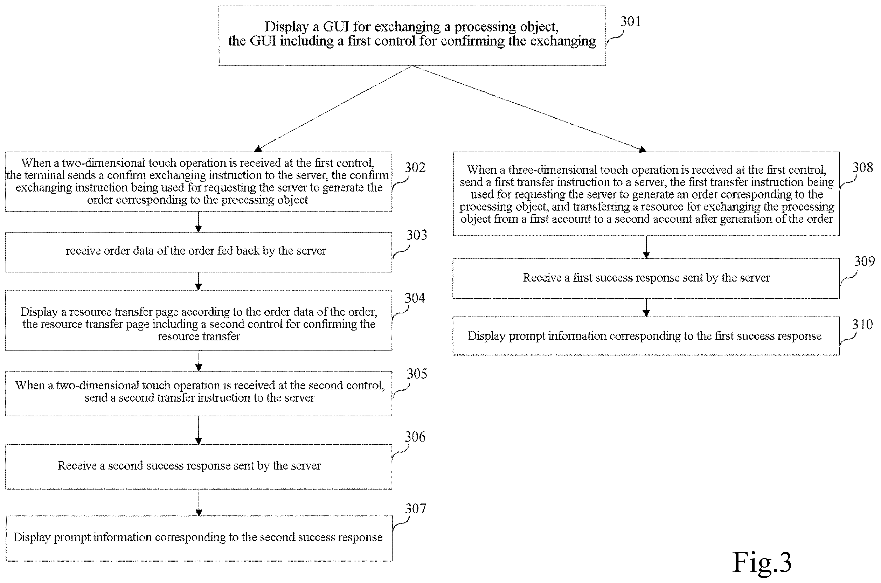

Fig. 3 is a flow chart of a resource transfer method provided by another exemplary embodiment of the present invention. In the present embodiment, illustrations are given by applying the resource transfer method to the terminal shown in Fig. 1. The method includes the following steps.

In step 301, a GUI for exchanging a processing object is displayed, the GUI including a first control for confirming the exchanging.

The terminal is a terminal used by a first user. Advantageously, the first user is a purchasing user. A first user account corresponding to the first user logs in the terminal.

The terminal acquires at least one piece of information of the processing object. The at least one piece of information includes: an identity of the processing object and an exchanging value. The exchanging value means an amount of the resource required for exchanging the processing object. Advantageously, the at least one piece of information further includes: a name of the processing object, a category of the processing object, graphic introduction information of the processing object, a second user account having the processing object, and the like.

The terminal displays a GUI for exchanging the processing object. The GUI includes: at least one piece of information of the processing object, and a first control for confirming the exchanging.

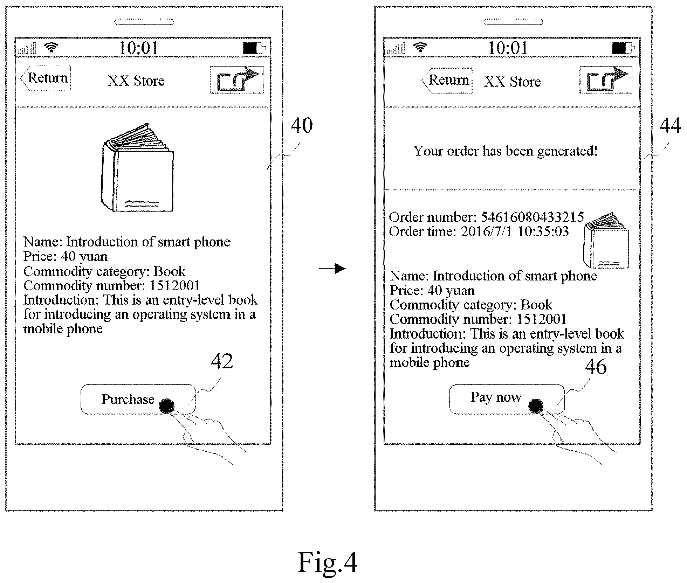

Illustratively, as shown in Fig. 4, the terminal is displayed with a web page 40, and the web page 40 is displayed with a name of the processing object "Introduction of smart phone", an exchanging value "40", an identity of the processing object "1512001", the category of the processing object "Book", the graphic introduction information of the processing object "This is an entry-level book for introducing an operating system in a mobile phone", a second user account having the processing object "xx Bookstore", and a first control for confirming the exchanging: "Purchase" button 42.

In different embodiments, the first control may also be controls having other names, such as "Purchase now" button, and "Add into shopping cart" button.

In step 302, when a two-dimensional touch operation is received at the first control, the terminal sends a confirm exchanging instruction to the server, the confirm exchanging instruction being used for requesting the server to generate the order corresponding to the processing object.

The two-dimensional touch operation means a touch operation not generating a pressure on the touch display screen. The touch operation may generate a two-dimensional touch signal on the touch display screen. Advantageously, the two-dimensional touch signal carries an abscissa axis and a vertical axis of the two-dimensional touch signal on the touch display screen.

The touch display screen may report the two-dimensional touch signal to a processor in the terminal. After receiving the two-dimensional touch signal, if the processor determines that the two-dimensional touch signal is a signal acting on the first control according to the abscissa axis and the vertical axis, then the processor sends a confirm exchanging instruction to the server.

The confirm exchanging instruction is used for requesting the server to generate an order corresponding to the processing object. Advantageously, the confirm exchanging instruction carries the first user account, the identity of the processing object, the exchanging value, the second user account, and a time stamp.

For example, the confirm exchanging instruction carries: *user1*, an article A, an exchanging value 40, a XX Bookstore, and 10:35:03 2016-7-1.

Correspondingly, the server receives the confirm exchanging instruction, and generates an order corresponding to the processing object according to the confirm exchanging instruction.

Advantageously, the server reads out the first user account, the identity of the processing object, the exchanging value, the second user account and the time stamp from the confirm exchanging instruction, and generates an order according to the read information.

Advantageously, each order has an individual order number.

Advantageously, after the generation of the order, the server feeds back order data to the terminal. The order data at least includes: the order number, the first user account, the identity of the processing object, the exchanging value, the second user account and the time stamp.

Advantageously, the order data is fed back to the terminal in a webpage form or an App (Application) data form.

In step 303, order data of the order fed back by the server is received.

In step 304, a resource transfer page is displayed according to the order data of the order, the resource transfer page including a second control for confirming the resource transfer.

Advantageously, the terminal adopts a form of webpage or App user interface to display a resource transfer page. The resource transfer page includes a second control for confirming the resource transfer.

Illustratively, as shown in Fig. 4, the terminal displays with an order page 44. The order page 44 displays with an order number "54616080433215", a name of the processing object "Introduction of smart phone", an exchanging value "40", an identity of the processing object "1512001", the category of the processing object "Book", the graphic introduction information of the processing object "This is an entry-level book for introducing an operating system in a mobile phone", a second user account having the processing object "xx Bookstore", and a second control for confirming the resource transfer: "Pay now" button 46.

In step 305, when a two-dimensional touch operation is received at the second control, a second transfer instruction is sent to the server.

The two-dimensional touch operation may generate a two-dimensional touch signal on the touch display screen. Advantageously, the two-dimensional touch signal carries an abscissa axis and a vertical axis of the two-dimensional touch signal on the touch display screen.

The touch display screen may report the two-dimensional touch signal to a processor in the terminal. After receiving the two-dimensional touch signal, if the processor determines that the two-dimensional touch signal is a signal acting on the second control according to the abscissa axis and the vertical axis, then the processor sends a second transfer instruction to the server.

Advantageously, before sending the second transfer instruction to the server, the terminal acquires user authorization information from the user, and after acquiring the user authorization information, the terminal sends the second transfer instruction to the server again.

The second transfer instruction is used for requesting the server to transfer the resource for exchanging the processing object from the first account to the second account. Advantageously, the second transfer instruction carries an order number, a first user account, an exchanging value, a second user account, the user authorization information and a time stamp.

For example, the second transfer instruction carries an order number "54616080433215", *user1*, the exchanging value 40, the XX Bookstore, a payment password, and 10:35:03 2016-7-1.

Correspondingly, the server receives the second transfer instruction, and transfers the resource for exchanging the processing object from the first account to the second account according to the second transfer instruction. After success of the transfer, the server sends a second success response to the terminal.

Advantageously, the first user account is the same as the first account, and the second user account is the same as the second account. Advantageously, the first user account and the first account are two different accounts having a binding relationship or an association relationship, and the second user account and the second account are two different accounts having a binding relationship or an association relationship.

Advantageously, the second account is a resource account of the seller, or an immediate account provided by a resource transfer platform. When the second account is the immediate account, when the exchanging procedure of the processing object is completed, the server transfers the resource for exchanging the processing object from the immediate account to the second account, and when the exchanging procedure of the processing object fails, the server returns the resource for exchanging the processing object from the immediate account to the first account.

In step 306, a second success response sent by the server is received.

In step 307, prompt information corresponding to the second success response is displayed.

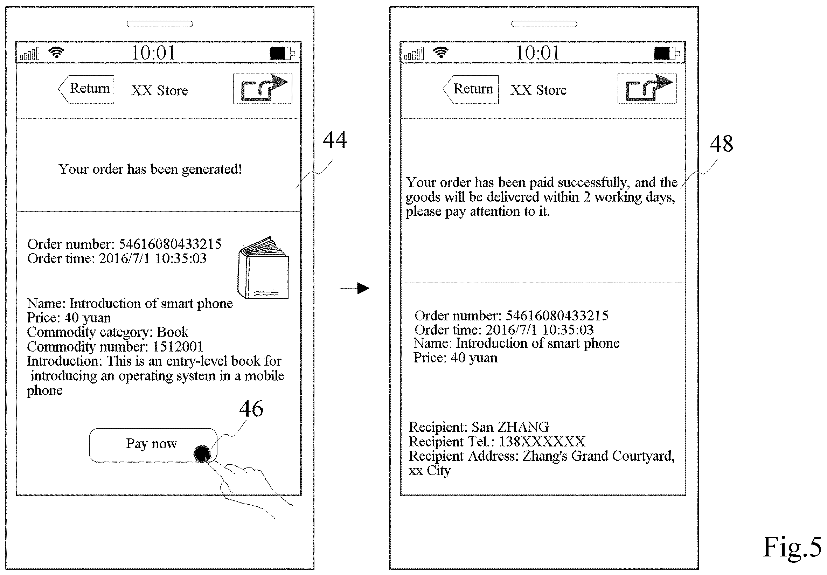

Illustratively, as shown in Fig. 5, after the "Pay now" button 46 in the order page 44 is pressed, the terminal displays a response webpage 48 corresponding to the second success response. The response webpage 48 has the prompt information "Your order has been paid successfully, and the goods will be delivered within 2 working days, please pay attention to it".

As an implementing manner parallel to steps 302-307, the following steps are referred to.

In step 308, when a three-dimensional touch operation is received at the first control, a first transfer instruction is sent to a server, the first transfer instruction being used for requesting the server to generate an order corresponding to the processing object, and transferring a resource for exchanging the processing object from a first account to a second account after generation of the order.

The three-dimensional touch operation indicates a touch operation not generating a pressure on the touch display screen. The touch operation may generate a three-dimensional touch signal on the touch display screen. Advantageously, the three-dimensional touch signal carries an abscissa axis, a vertical axis and a pressure value of the three-dimensional touch signal on the touch display screen.

The touch display screen may report the three-dimensional touch signal to a processor in the terminal. After receiving the three-dimensional touch signal, if the processor determines that the three-dimensional touch signal is a signal acting on the first control according to the abscissa axis and the vertical axis, then the processor sends a first transfer instruction to the server.

The first transfer instruction is used for requesting the server to generate an order corresponding to the processing object, and transferring a resource for exchanging the processing object from a first account to a second account after generation of the order. That is, the first transfer instruction possesses functions of both the confirm exchanging instruction and the second transfer instruction. Advantageously, the first transfer instruction carries a first user account, an identity of the processing object, an exchanging value, a second user account and a time stamp.

Correspondingly, the server receives the first transfer instruction, generates an order corresponding to the processing object according to the first transfer instruction, and transfers the resource for exchanging the processing object from the first account to the second account after generation of the order.

In step 309, a first success response sent by the server is received.

In step 310, prompt information corresponding to the first success response is displayed.

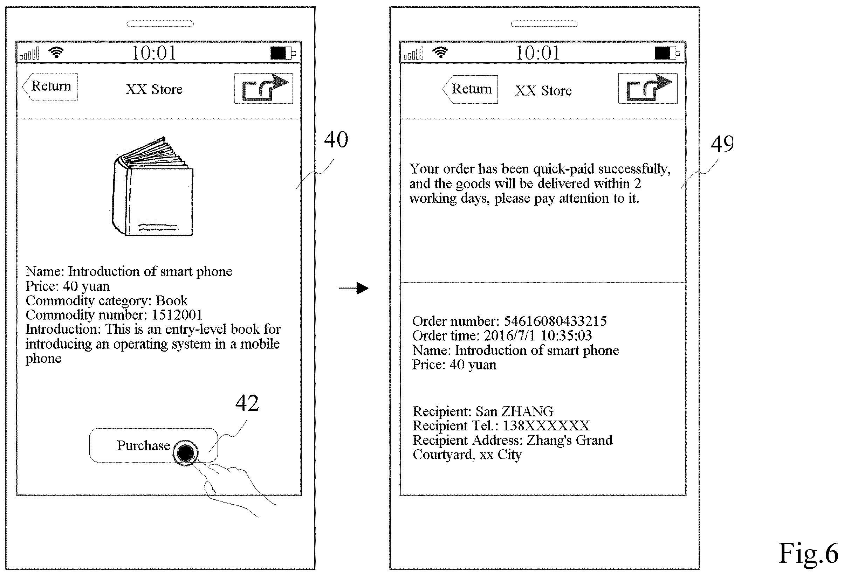

Illustratively, as shown in Fig. 6, after the "Purchase" button 42 in the web page 40 is pressed, the terminal displays a response webpage 49 corresponding to the second success response. The response webpage 49 has the prompt information "Your order has been generated and quick-paid successfully, and the goods will be delivered within 2 working days, please pay attention to it".

In summary, in the resource transfer method provided by the present embodiment, when a three-dimensional touch operation is received at the first control, a first transfer instruction is directly sent to a server, then the server generates an order corresponding to the processing object according to the first transfer instruction, and transfers a resource for exchanging the processing object from a first account to a second account after generation of the order; which solves the problem in the related art that the generation and payment of orders can only be completed by using multiple touch operations, and achieves the effects that the user can complete the generation and payment of the orders only by using one three-dimensional touch operation, operation numbers of the user and waiting time for jumping of the graphical user interface are reduced, and the operating efficiency of the user is improved.

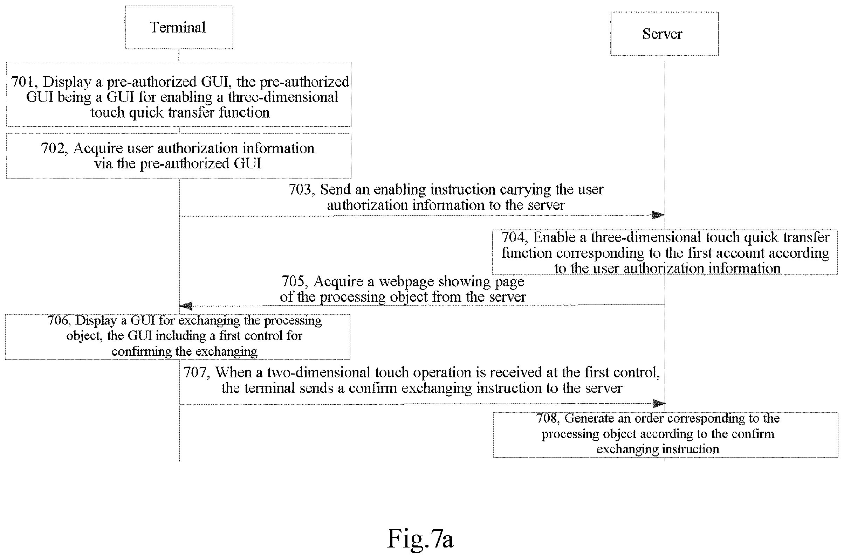

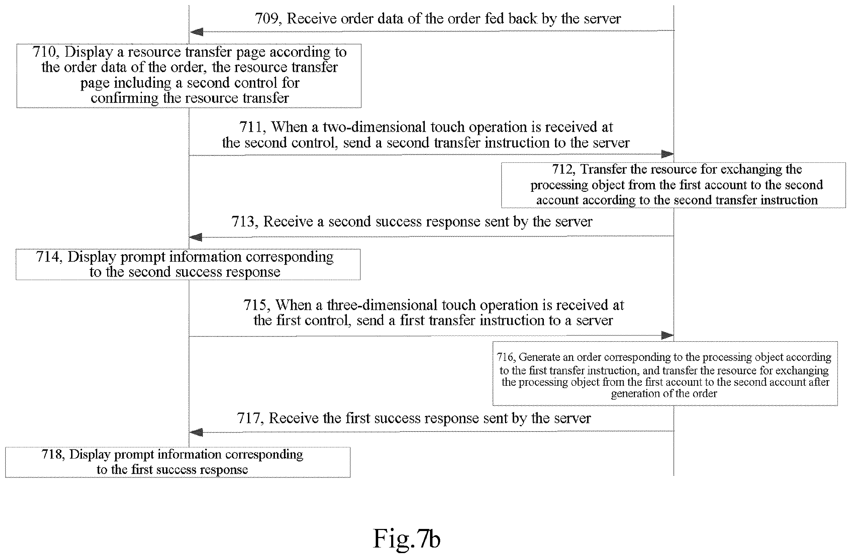

Fig. 7 is a flow chart of a resource transfer method provided by another exemplary embodiment of the present invention. In the present embodiment, illustrations are given by applying the resource transfer method to the resource transfer system shown in Fig. 1. The method includes the following steps.

In step 701, the terminal displays a pre-authorized GUI, the pre-authorized GUI being a GUI for enabling a three-dimensional touch quick transfer function.

The terminal is a terminal used by a first user. Advantageously, the first user is a purchasing user. A first user account corresponding to the first user logs in the terminal.

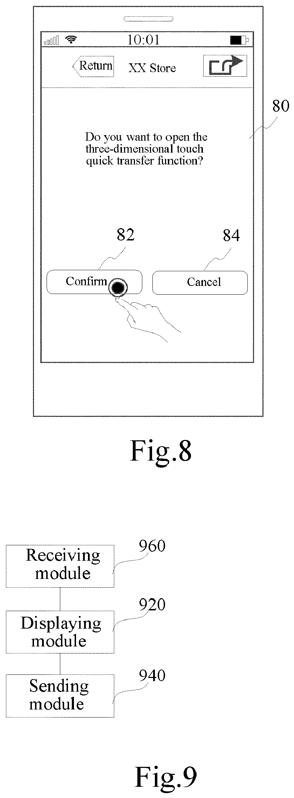

Illustratively, as shown in Fig. 8, the terminal displays a pre-authorized GUI (Graphical User Interface) 80, and the pre-authorized GUI 80 displays with prompt information "Do you want to open the three-dimensional touch quick transfer function", "Confirm" button 82 and "Cancel" button 84.

In step 702, the terminal acquires user authorization information via the pre-authorized GUI.

After the user clicks the "Confirm" button 82, the terminal acquires the user authorization information via the pre-authorized GUI.

Advantageously, forms of the user authorization information are at least one of a digital password, a character password, a graphical password, a fingerprint password, a voiceprint password, and an iris password.

Advantageously, the user authorization information is a password registered by the first user to the server in advance.

In step 703, the terminal sends an enabling instruction carrying the user authorization information to the server.

Advantageously, the enabling instruction is used for indicating the server to enable the three-dimensional touch quick transfer function corresponding to the first account.

After acquiring the user authorization information, the terminal generates an enabling instruction carrying the user authorization information. The terminal sends the enabling instruction carrying the user authorization information to the server.

Advantageously, the terminal sends the enabling instruction to the resource transfer server.

In step 704, the server enables a three-dimensional touch quick transfer function corresponding to the first account according to the user authorization information.

Advantageously, the resource transfer server is stored with respective accounts and resources corresponding to individual accounts.

Advantageously, the resource transfer server verifies the user authorization information. If the verification is successful, the resource transfer server enables the three-dimensional touch quick transfer function corresponding to the first account, and sends an enabling success response to the terminal; and if the verification fails, the resource transfer server does not enable the three-dimensional touch quick transfer function corresponding to the first account, and sends an enabling failure response to the terminal.

In the present embodiment, illustrations are given by using an example in which the three-dimensional touch quick transfer function is enabled successfully.

In step 705, the terminal acquires a webpage showing page of the processing object from the server.

Advantageously, the terminal acquires a webpage showing page of the processing object from an information server. The webpage showing page includes at least one piece of information of the processing object. The at least one piece of information includes: an identity of the processing object and an exchanging value. The exchanging value means an amount of the resource required for exchanging the processing object. Advantageously, the at least one piece of information further includes: a name of the processing object, a category of the processing object, graphic introduction information of the processing object, a second user account having the processing object, and the like.

In step 706, the terminal displays a GUI for exchanging the processing object, the GUI including a first control for confirming the exchanging.

The terminal displays a GUI for exchanging the processing object, and the GUI includes at least one piece of information of the processing object and a first control for confirming the exchanging.

In step 707, when a two-dimensional touch operation is received at the first control, the terminal sends a confirm exchanging instruction to the server.

Advantageously, the confirm exchanging instruction is used for requesting the server to generate an order corresponding to the processing object.

The two-dimensional touch operation means a touch operation not generating a pressure on the touch display screen. The touch operation may generate a two-dimensional touch signal on the touch display screen. Advantageously, the two-dimensional touch signal carries an abscissa axis and a vertical axis of the two-dimensional touch signal on the touch display screen.

The touch display screen may report the two-dimensional touch signal to a processor in the terminal. After receiving the two-dimensional touch signal, if the processor determines that the two-dimensional touch signal is a signal acting on the first control according to the abscissa axis and the vertical axis, then the processor sends a confirm exchanging instruction to the order managing server.

The confirm exchanging instruction is used for requesting the server to generate an order corresponding to the processing object. Advantageously, the confirm exchanging instruction carries a first user account, an identity of the processing object, an exchanging value, a second user account, and a time stamp.

Correspondingly, the order managing server receives the confirm exchanging instruction.

In step 708, the server generates an order corresponding to the processing object according to the confirm exchanging instruction.

Advantageously, the order managing server reads out the first user account, the identity of the processing object, the exchanging value, the second user account and the time stamp from the confirm exchanging instruction, and generates an order according to the read information.

Advantageously, each order has an individual order number.

Advantageously, after the generation of the order, the order managing server feeds back order data to the terminal. The order data at least includes: the order number, the first user account, the identity of the processing object, the exchanging value, the second user account and the time stamp.

Advantageously, the order data is fed back to the terminal in a webpage form or an App (Application) data form.

In step 709, the terminal receives order data of the order fed back by the server.

Advantageously, the terminal receives the order data of the order fed back by the order managing server.

In step 710, the terminal displays a resource transfer page according to the order data of the order, the resource transfer page including a second control for confirming the resource transfer.

Advantageously, the terminal adopts a form of webpage or App user interface to display a resource transfer page. The resource transfer page includes a second control for confirming the resource transfer.

In step 711, when a two-dimensional touch operation is received at the second control, a second transfer instruction is sent to the server.

The two-dimensional touch operation may generate a two-dimensional touch signal on the touch display screen. Advantageously, the two-dimensional touch signal carries an abscissa axis and a vertical axis of the two-dimensional touch signal on the touch display screen.

The touch display screen may report the two-dimensional touch signal to a processor in the terminal. After receiving the two-dimensional touch signal, if the processor determines that the two-dimensional touch signal is a signal acting on the second control according to the abscissa axis and the vertical axis, then the processor sends a second transfer instruction to the resource transfer server.

Advantageously, before sending the second transfer instruction to the server, the terminal acquires user authorization information from the user, and after acquiring the user authorization information, the terminal sends the second transfer instruction to the resource transfer server again.

The second transfer instruction is used for requesting the server to transfer the resource for exchanging the processing object from the first account to the second account. Advantageously, the second transfer instruction carries an order number, a first user account, an exchanging value, a second user account, and a time stamp.

Correspondingly, the resource transfer server receives the second transfer instruction.

In step 712, the server transfers the resource for exchanging the processing object from the first account to the second account according to the second transfer instruction.

First, the resource transfer server acquires the order data from the second transfer instruction, and checks whether the order data is correct with the order managing server; and when the order data is correct, the resource transfer server transfers the resource for exchanging the processing object from the first account to the second account or an immediate account.

Advantageously, the first user account is the same as the first account, and the second user account is the same as the second account. Advantageously, the first user account and the first account are two different accounts having a binding relationship or an association relationship, and the second user account and the second account are two different accounts having a binding relationship or an association relationship.

Advantageously, the second account is a resource account of the seller, or an immediate account provided by a resource transfer platform. When the second account is the immediate account, when the exchanging procedure of the processing object is completed, the server transfers the resource for exchanging the processing object from the immediate account to the second account; and when the exchanging procedure of the processing object fails, the server returns the resource for exchanging the processing object from the immediate account to the first account.

After success of the transfer, the resource transfer server sends a second success response to the terminal. Advantageously, the resource transfer server also sends a transfer success response to the order managing server, such that the order managing server modifies an order state.

In step 713, the terminal receives a second success response sent by the server.

In step 714, the terminal displays prompt information corresponding to the second success response.

As an implementing manner parallel to steps 707-714, the following steps are referred to.

In step 715, when a three-dimensional touch operation is received at the first control, a first transfer instruction is sent to a server.

Advantageously, the first transfer instruction is used for requesting the server to generate an order corresponding to the processing object, and transferring a resource for exchanging the processing object from a first account to a second account after generation of the order.

The three-dimensional touch operation indicates a touch operation not generating a pressure on the touch display screen. The touch operation may generate a three-dimensional touch signal on the touch display screen. Advantageously, the three-dimensional touch signal carries an abscissa axis, a vertical axis and a pressure value of the three-dimensional touch signal on the touch display screen.

The touch display screen may report the three-dimensional touch signal to a processor in the terminal. After receiving the three-dimensional touch signal, if the processor determines that the three-dimensional touch signal is a signal acting on the first control according to the abscissa axis and the vertical axis, then the processor sends a first transfer instruction to the order managing server.

The first transfer instruction is used for requesting the server to generate an order corresponding to the processing object, and transferring a resource for exchanging the processing object from a first account to a second account after generation of the order. That is, the first transfer instruction possesses functions of both the confirm exchanging instruction and the second transfer instruction. Advantageously, the first transfer instruction carries a first user account, an identity of the processing object, an exchanging value, a second user account and a time stamp.

Correspondingly, the order managing server receives the first transfer instruction.

In step 716, the server generates an order corresponding to the processing object according to the first transfer instruction, and transfers the resource for exchanging the processing object from the first account to the second account after generation of the order.

The order managing server generates the order corresponding to the processing object according to the first transfer instruction, and after generation of the order, sends a transfer instruction to the resource transfer server. After receiving the transfer instruction, the resource transfer server inquires whether the first account enables a three-dimensional touch quick transfer function according to the first user account. When the three-dimensional touch quick transfer function is enabled, the resource transfer server transfers the resource for exchanging the processing object from the first account to the second account.

After success of the transfer, the resource transfer server sends a first success response to the terminal.

In step 717, the terminal receives the first success response sent by the server.

In step 718, the terminal displays prompt information corresponding to the first success response.

In summary, in the resource transfer method provided by the present embodiment, when a three-dimensional touch operation is received at the first control, a first transfer instruction is directly sent to a server, then the server generates an order corresponding to the processing object according to the first transfer instruction, and transfers a resource for exchanging the processing object from a first account to a second account after generation of the order; which solves the problem in the related art that the generation and payment of orders can only be completed by using multiple touch operations, and achieves the effects that the user can complete the generation and payment of the orders only by using one three-dimensional touch operation, operation numbers of the user and waiting time for jumping of the graphical user interface are reduced, and the operating efficiency of the user is improved.

Fig. 9 is a block diagram of a resource transfer device provided by another exemplary embodiment of the present invention. The resource transfer device may be realized as a whole or a part of a terminal by software, hardware, or a combination thereof. The device includes: a displaying module 920, a sending module 940, and a receiving module 960.

The displaying module 920 is configured to display a Graphical User Interface GUI for exchanging a processing object, the GUI including a first control for confirming the exchanging.

The sending module 940 is configured to, when a three-dimensional touch operation is received at the first control, send a first transfer instruction to a server, the first transfer instruction being used for requesting the server to generate an order corresponding to the processing object, and transferring a resource for exchanging the processing object from a first account to a second account after generation of the order.

The receiving module 960 is configured to receive a first success response sent by the server.

The displaying module 920 is configured to display prompt information corresponding to the first success response.

In an optional embodiment, the device further includes:
the sending module 940 configured to, when the two-dimensional touch operation is received at the first control, send a confirm exchanging instruction to the server, the confirm exchanging instruction being used for requesting the server to generate the order corresponding to the processing object;
the receiving module 960 configured to receive order data of the order fed back by the server; and
the displaying module 920 configured to display a resource transfer page according to the order data of the order, the resource transfer page including a second control for confirming the resource transfer.

In an optional embodiment, the sending module 940 is configured to, when a two-dimensional touch operation is received at the second control, send a second transfer instruction to the server, the second transfer instruction being used for requesting the server to transfer the resource for exchanging the processing object from the first account to the second account;
the receiving module 960 is configured to receive a second success response sent by the server; and
the displaying module 920 is configured to display prompt information corresponding to the second success response.

In an optional embodiment, the device further includes: an acquiring module (not shown in the drawings),
the displaying module 920 is configured to display a pre-authorized GUI, the pre-authorized GUI being a GUI for enabling a three-dimensional touch quick transfer function;
the acquiring module is configured to acquire user authorization information via the pre-authorized GUI; and
the sending module 940 is configured to send an enabling instruction carrying the user authorization information to the server, the enabling instruction being used for indicating the server to enable the three-dimensional touch quick transfer function corresponding to the first account.

In an optional embodiment, the processing object is a commodity, the first control is a purchase button, the resource is currency in an electronic form, the first account is a resource account of a purchaser, and the second account is a resource account of a seller or an immediate account provided by a resource transfer platform.

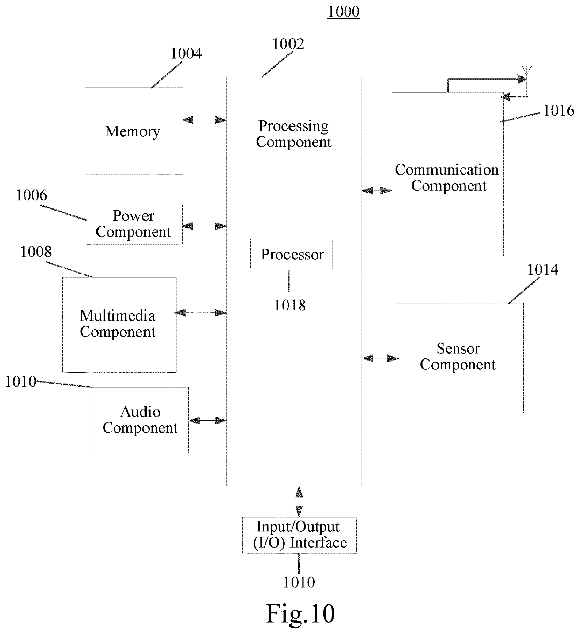

Fig. 10 is a block diagram of a resource transfer device provided by another exemplary embodiment of the present invention. For example, the device 1000 may be a mobile phone, a computer, a digital broadcast terminal, a messaging device, a gaming console, a tablet, a medical device, exercise equipment, a personal digital assistant, and the like.

Referring to Fig. 10, the terminal device 1000 may include one or more of the following components: a processing component 1002, a memory 1004, a power component 1006, a multimedia component 1008, an audio component 1010, an input/output (I/O) interface 1012, a sensor component 1014, and a communication component 1016.

The processing component 1002 typically controls overall operations of the device 1000, such as the operations associated with display, telephone calls, data communications, camera operations, and recording operations. The processing component 1002 may include one or more processors 1018 to execute instructions to perform all or part of the steps in the above described methods. Moreover, the processing component 1002 may include one or more modules which facilitate the interaction between the processing component 1002 and other components. For instance, the processing component 1002 may include a multimedia module to facilitate the interaction between the multimedia component 1008 and the processing component 1002.

The memory 1004 is configured to store various types of data to support the operation of the device 1000. Examples of such data include instructions for any applications or methods operated on the device 1000, contact data, phonebook data, messages, pictures, video, etc. The memory 1004 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1006 provides power to various components of the device 1000. The power component 1006 may include a power management system, one or more power sources, and any other components associated with the generation, management, and distribution of power in the device 1000.

The multimedia component 1008 includes a screen providing an output interface between the device 1000 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1008 includes a front camera and/or a rear camera. The front camera and/or the rear camera may receive an external multimedia datum while the device 1000 is in an operation mode, such as a photographing mode or a video mode. Each of the front camera and the rear camera may be a fixed optical lens system or have focus and optical zoom capability.

The audio component 1010 is configured to output and/or input audio signals. For example, the audio component 1010 includes a microphone ("MIC") configured to receive an external audio signal when the device 1000 is in an operation mode, such as a call mode, a recording mode, and a voice recognition mode. The received audio signal may be further stored in the memory 1004 or transmitted via the communication component 1016. In some embodiments, the audio component 1010 further includes a speaker to output audio signals.

The I/O interface 1012 provides an interface between the processing component 1002 and peripheral interface modules, such as a keyboard, a click wheel, buttons, and the like. The buttons may include, but are not limited to, a home button, a volume button, a starting button, and a locking button.

The sensor component 1014 includes one or more sensors to provide status assessments of various aspects of the device 1000. For instance, the sensor component 1014 may detect an open/closed status of the device 1000, relative positioning of components, e.g., the display and the keypad, of the device 1000, a change in position of the device 1000 or a component of the device 1000, a presence or absence of user contact with the device 1000, an orientation or an acceleration/deceleration of the device 1000, and a change in temperature of the device 1000. The sensor component 1014 may include a proximity sensor configured to detect the presence of nearby objects without any physical contact. The sensor component 1014 may also include a light sensor, such as a CMOS or CCD image sensor, for use in imaging applications. In some embodiments, the sensor component 1014 may also include an accelerometer sensor, a gyroscope sensor, a magnetic sensor, a pressure sensor, or a temperature sensor.

The communication component 1016 is configured to facilitate communication, wired or wirelessly, between the device 1000 and other devices. The device 1000 can access a wireless network based on a communication standard, such as WiFi, 2G, or 3G, or a combination thereof. In one exemplary embodiment, the communication component 1016 receives a broadcast signal or broadcast associated information from an external broadcast management system via a broadcast channel. In one exemplary embodiment, the communication component 1016 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 1000 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described resource transfer methods.

In exemplary embodiments, there is also provided a non-transitory computer-readable storage medium including instructions, such as the memory 1004 including instructions, the above instructions are executable by the processor 1018 in the device 1000, for performing the above-described resource transfer methods. For example, the non-transitory computer-readable storage medium may be a ROM, a RAM, a CD-ROM, a magnetic tape, a floppy disc, an optical data storage device, and the like.

Other embodiments of the invention will be apparent to those skilled in the art from consideration of the specification and practice of the invention disclosed here. This application is intended to cover any variations, uses, or adaptations of the invention following the general principles thereof and including such departures from the present invention as come within known or customary practice in the art. It is intended that the specification and examples be considered as exemplary only, with a true scope of the invention being indicated by the following claims.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

## Claims

1. A resource transfer method, comprising:
displaying (201, 301, 706) a Graphical User Interface GUI for exchanging a processing object, the GUI comprising a first control for confirming the exchanging;
when a three-dimensional touch operation is received at the first control, sending (202, 308, 715) a first transfer instruction to a server, the first transfer instruction being used for requesting the server to generate an order corresponding to the processing object, and transferring a resource for exchanging the processing object from a first account to a second account after generation of the order;
receiving (203, 309, 717) a first success response sent by the server; and
displaying (204, 310, 718) prompt information corresponding to the first success response.

2. The method of claim 1, further comprising:
when a two-dimensional touch operation is received at the first control, sending (302, 707) a confirm exchanging instruction to the server, the confirm exchanging instruction being used for requesting the server to generate the order corresponding to the processing object;
receiving (303, 709) order data of the order fed back by the server; and
displaying (304, 710) a resource transfer page according to the order data of the order, the resource transfer page comprising a second control for confirming the resource transfer.

3. The method of claim 2, further comprising:
when the two-dimensional touch operation is received at the second control, sending (305, 711) a second transfer instruction to the server, the second transfer instruction being used for requesting the server to transfer the resource for exchanging the processing object from the first account to the second account;
receiving (306, 713) a second success response sent by the server; and
displaying (307, 714) prompt information corresponding to the second success response.

4. The method of any of claims 1-3, further comprising:
displaying (701) a pre-authorized GUI, the pre-authorized GUI being a GUI for enabling a three-dimensional touch quick transfer function;
acquiring (702) user authorization information via the pre-authorized GUI; and
sending (703) an enabling instruction carrying the user authorization information to the server, the enabling instruction being used for indicating the server to enable the three-dimensional touch quick transfer function corresponding to the first account.

5. The method of any of claims 1-4, wherein the processing object is a commodity, the first control is a purchase button, the resource is currency in an electronic form, the first account is a resource account of a purchaser, and the second account is a resource account of a seller or an immediate account provided by a resource transfer platform.

6. A resource transfer device, comprising:
a displaying module (920) configured to display a Graphical User Interface GUI for exchanging a processing object, the GUI comprising a first control for confirming the exchanging;
a sending module (940) configured to, when a three-dimensional touch operation is received at the first control, send a first transfer instruction to a server, the first transfer instruction being used for requesting the server to generate an order corresponding to the processing object, and transferring a resource for exchanging the processing object from a first account to a second account after generation of the order; and
a receiving module (960) configured to receive a first success response sent by the server;
wherein the displaying module is configured to display prompt information corresponding to the first success response.

7. The device of claim 6, wherein
the sending module (940) is configured to, when a two-dimensional touch operation is received at the first control, send a confirm exchanging instruction to the server, the confirm exchanging instruction being used for requesting the server to generate the order corresponding to the processing object;
the receiving module (960) is configured to receive order data of the order fed back by the server; and
the displaying module (920) is configured to display a resource transfer page according to the order data of the order, the resource transfer page comprising a second control for confirming the resource transfer.

8. The device of claim 7, wherein
the sending module (940) is configured to, when the two-dimensional touch operation is received at the second control, send a second transfer instruction to the server, the second transfer instruction being used for requesting the server to transfer the resource for exchanging the processing object from the first account to the second account;
the receiving module (960) is configured to receive a second success response sent by the server; and
the displaying module (920) is configured to display prompt information corresponding to the second success response.

9. The device of any of claims 6-8, further comprising: an acquiring module, wherein
the displaying module (920) is configured to display a pre-authorized GUI, the pre-authorized GUI being a GUI for enabling a three-dimensional touch quick transfer function;
the acquiring module is configured to acquire user authorization information via the pre-authorized GUI; and
the sending module (940) is configured to send an enabling instruction carrying the user authorization information to the server, the enabling instruction being used for indicating the server to enable the three-dimensional touch quick transfer function corresponding to the first account.

10. The device of any of claims 6-9, wherein the processing object is a commodity, the first control is a purchase button, the resource is currency in an electronic form, the first account is a resource account of a purchaser, and the second account is a resource account of a seller or an immediate account provided by a resource transfer platform.

11. A resource transfer device, comprising:
a processor (1018);
a memory (1004) for storing instructions executable by the processor (1018); and
a three-dimensional touch display screen connected with the processor (1018),
wherein the processor (1018) is configured to perform a method according to any one of claims 1 to 5.

12. A computer program, which when executed on a processor of a terminal, performs a method according to any one of claims 1 to 5.

13. A computer readable storage device having stored thereon a computer program according to claim 12.
